# EUROPEAN PATENT SPECIFICATION

(11) **EP 1 239 407 B1**
(45) Date of publication and mention of the grant of the patent: **01.10.2008**
(21) Application number: 02075926.2
(22) Date of filing: 25.02.2002
(51) Int. Cl.: G06K 15/02

(54) **Method of configuring a printer and an ink cartridge**
Verfahren für die Konfiguration eines Druckers und Tintenpatrone
Procédé de configuration d'une imprimante et une cartouche d'encre

(30) Priority: 02.03.2001 EP 01200796
(43) Date of publication of application: 11.09.2002
(73) Proprietor: Océ-Technologies B.V., 5914 CC Venlo (NL)
(72) Inventor: Van der Meijs, Hermanus Henricus, 5915 ZB Venlo (NL)
(74) Representative: van de Sande, Jacobus

(56) References cited:
- EP-A- 0 971 287
- EP-A- 1 004 449
- WO-A-01/14146

## Description

The invention relates a method of configuring a printer, wherein a set of downloaded printing parameters is stored In a control unit of the printer.

The invention further relates to a printer suitable for executing this method and to an ink cartridge for use with an ink jet printer of this type.

Such a method is known from WO 01/14146 A1. In there a printer is described that is configured from a remote location, in casu from another printer with a web-server by an IT manager, by downloading the printing parameters from the printer with the web-server in the electronics of the printer.

A printer typically has at least one functional component, e.g. a nozzle head or an ink cartridge in case of an ink jet printer, an LED array, a photoconductor or a toner cartridge in case of a laser printer, which influences the settings of printing parameters. Thus, when such a functional component is replaced, it may be necessary to reconfigure the printer, i.e. to change the parameter settings, in order to assure a proper operation of the printer and/or to achieve the best possible image quality. One example of printing parameters which need to be reconfigured upon insertion of a new print head into the printer are the voltages with which the individual nozzles of an Ink Jet nozzle head or the individual LEDs of a laser printer are to be energised. Another example is the compensation of positional errors of the individual nozzles or LEDs. In a scanningtype ink jet printer or laser printer, the nozzles and LEDs, respectively, are typically arranged in a linear array which extends orthogonal to the main scanning direction. Due to manufacturing tolerances, the positions of the nozzles or LEDs in the main scanning direction may slightly deviate from one another. Such position errors can be compensated by providing suitable time offsets in the timings at which the nozzles or LEDs are fired during the scan motion of the print head. The nozzles of print heads manufactured in one and the same production series will normally have the same position errors, so that the corresponding time offsets will be the same for all print heads belonging to this series. However, when a print head from another production series is used, it may be necessary to reconfigure the printer in order to provide that corrected time offsets. Other parameters may, for example, be related to the transportation speed of the recording paper, compensation of changes in the slip and/or thickness of the recording paper, colour correction routines and the like.

Some printing parameters such as voltages, operating temperatures and the like may also depend on the age of the ink or toner being used.

For more convenient configuring or re-configuring of a printer having an interchangeable print head, is has been known for long that the printing parameters pertinent for a specific print head may be encoded or stored in a memory element that is provided on the print head. When the print head is mounted in a printer, the information stored In the memory element is automatically read by the control unit of the printer, and thus, the new printing parameters are stored. Methods of this type are disclosed for example in "Xerox Disclosure Journal" Vol. 8, No. 6, 1983, page 503; US-A 4 872 027; US-A-5 049 898 and EP 1 004 449 A2. These known methods all have the drawback that, once the printing parameters have been stored in the memory element, it is no longer possible or very cumbersome to adapt the configuration of the printer, when the operating conditions have changed.

In EP 0 871 287 A2 a printer is described provided with a telephone device and a memory for storing connection information required for communicating with external web sites, such as a telephone number. Printing parameters are not mentioned in EP 0 971 287 A2.

The method described in WO 01/14146 A1 has as drawback that each printer includes a web-server containing all available sets of printing parameters, so that the maintenance of these parameters has to be executed for each printer. Another drawback is that intervention of a user is always required to select the wanted printing parameters.

It is an object of the invention to provide a method and a printer which permit to change the configuration of the printer more flexibly.

According to the invention, this object Is achieved by the method according to the preamble of claim 1 further comprising the steps of:
- storing the set of printing parameters, which is adapted to a specific functional component of the printer, in a storage device addressable over the internet at a predetermined URI (Universal Resource Identifier),
- when the printer is to be configured, automatically getting access to said URI, and
- downloading the set of printing parameters directly from the storage device into the control unit of the printer.

Thus, the printing parameters pertinent to the functional component are downloaded through the Internet.

It has been proposed already In US-A-6 003 078 to use Internet communication for remote failure diagnosis of a printer connected to a computer network. The invention, however, uses the Internet for a different purpose, namely for performing a configuration procedure which is normally executed either manually or automatically before the printer is first put into operation or when a functional component of the printer has been interchanged. Since the printing parameters are downloaded through the Internet directly into the control unit of the printer, the user is relieved from the burden entering the printing parameters manually, as in the prior art in which the printing parameters are read from a memory element on the functional component. The main advantage of the invention is that the set of printing parameters pertinent to a specific functional component can be modified even after the functional component has been delivered. As a result, it is possible for example to take account for new experiences which have been made on the side of the manufacturer after the printers and the functional components thereof have been delivered and have been used in practice for some time. Likewise, it is possible to adapt the configuration of the printer to new technical developments or new operating conditions which have not been foreseen at the time when the functional component was manufactured and delivered. For example, when the functional component is a photoconductor drum of a laser printer, the printing parameters that have originally been specified for this photoconductor drum will be optimised for a specific type of toner material to be used with the printer. When, at a later time, a new toner material becomes available, the printer can easily be reconfigured for use with the new toner material by downloading an appropriately modified set of printing parameters. Likewise, the printer may be reconfigured for a new type of recording media.

It is even possible within the framework of the invention to add new functionality to the printer. For example, the printing parameters downloaded through the Internet may specify a newly developed or improved procedure for cross talk compensation in an ink jet printer or for colour correction in a multi-colour printer. It will be understood in this context that the term "printing parameters" as used herein is not restricted to a set of constants but may also encompass a set of instructions or a software routine to be incorporated in the control program of a printer.

A method according to the invention can conveniently be combined with a known Internet based remote diagnosis system for the printer. Then, the printer may be reconfigured in accordance with the result of the remote diagnosis.

More specific optional features of the invention are indicated in the dependent claims.

Preferably, the URI under which the printing parameters for a given functional component of the printer have been stored is specified on the functional component itself, either in writing or, more preferably, in a machine-readable format, so as to be read automatically when the functional component is inserted into the printer. This will further enhance the convenience for the user and will assure that the correct set of printing parameters is downloaded without the risk of confusion.

A printer suitable for carrying out the method according to the invention comprises a control unit including a memory for storing the printing parameters, and an Internet client, e.g. in the form of a program loaded in the control unit, for connecting to the URI and for loading the printing parameters into the memory.

Preferably, the printer further comprises a reading head for reading the URI indicated on the functional component when the latter is inserted in the printer. In this case, the Internet client will contact the URI read by the reading head, so that it is not necessary for the user to input the URI manually. The printer may further be programmed to activate the Internet client automatically when a new functional component is inserted in the printer, so that the printer will automatically configure or reconfigure itself without intervention of the user.

An ink or toner cartridge for use with a printer according to the invention is characterised by comprising a memory element in which an URI is stored in a machine-readable format.

Preferred embodiments of the invention will now be described in conjunction with the drawings, in which:
- Fig. 1: is a block diagram of a network architecture illustrating different embodiments of the invention;
- Fig. 2: is an example of a set of printing parameters available on the Internet; and
- Fig. 3: is a flow chart of a program for configuring the printer.

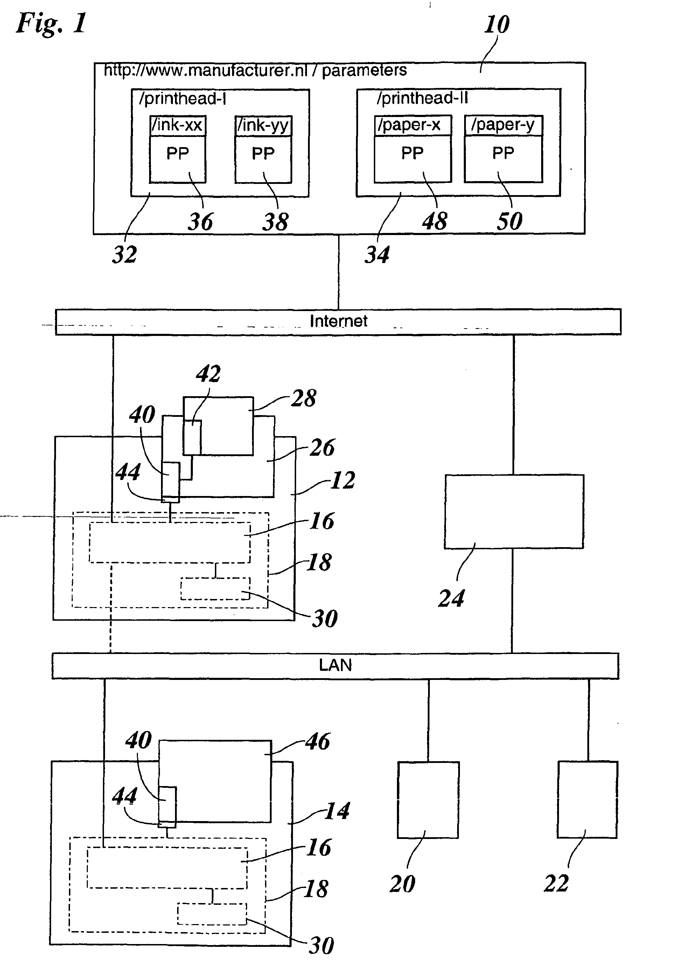

As is shown in figure 1, a web server 10 communicates with a number of printers 12, 14 through the Internet. The printer 12 is directly connected to the Internet through an Internet client 16 which is incorporated in a control unit 18 of the printer. As an alternative, the Internet client 16 may be connected to the Internet through a local area network (LAN), as is indicated by a dashed line in figure 1. As is well known in the art, the LAN further connects the printer 12 to a number of workstations 20, 22, so that print jobs may be sent from the workstations to the printer 12. The LAN is connected to the Internet through an internet gateway 24.

In the example shown, the printer 12 is an ink jet printer having an interchangeable print head 26 to which at least one interchangeable ink cartridge 28 is mounted. The control unit 18 of the printer 12 includes a memory 30 for storing at least one set of printing parameters which are needed for appropriately controlling the printing operations. The set of printing parameters that is actually used for controlling the printer 12 is specifically adapted to the properties of the interchangeable functional components, i.e. to the properties of the print head 26 and to the properties of the ink contained in the ink cartridge 28.

The Internet client 16, which is implemented in the control unit 18, is connected to both the Internet and the memory 30 and is capable of downloading a new set of printing parameters from the web server 10. These printing parameters will then be stored in the memory 30.

The web server 10 is, for example, run by the manufacturer of the printers 12, 14 and provides a number of pages 32, 34 each of which is assigned to a specific type or production series of print heads. It may be assumed here that the page 32 which has the Internet sub-address "/printhead-I" is assigned to the print head 26 installed in the printer 12. The page 32 has a number of sub-pages 36, 38 each storing a set of printing parameters PP for a specific type of ink under the sub-address "/ink-A" and "/ink-B", respectively. By way of example, "ink-A" specifies the type of ink contained in the ink cartridge 28. The printing parameters PP stored on the page 36 are then optimised in view of the properties of the print head 26 and in view of the properties of the ink contained in the ink cartridge 28.

When the user has purchased a new print head 26 and/or a new ink cartridge 28 and has installed these functional components in the printer 12, the printer should be configured accordingly, i.e. the pertinent printing parameters stored in the sub-page 36 should be downloaded into the memory 30 of the printer.

Optionally, the user may call up the download procedure manually from one of the workstations 20, 22. In this case, the user will enter the pertinent download address of the web server 10, i.e. "http://www.manufacturer.nl/parameters/printhead-I/ink-xx". The address information will be found on the print head 26 and on the ink cartridge 28 and/or on the package material thereof and/or in a service manual. When the connection to the web server 10 is established, the user will click a download button to start the download procedure. The web server 10 will then send the printing parameters which will be transferred into the memory 30 as the active printing parameters.

According to the shown embodiment, the procedure for configuring the printer 12 may also be performed automatically by the control unit 18 of the printer. To this end, the print head 26 and the ink cartridge 28 each include a memory element 40 and 42, respectively, which may for example be formed by an integrated circuit chip. The memory element 40 stores the first part of the URI pertinent to the print head 26, i.e. "http://www.manufacturer.nl/parameters/print head-I", whereas the memory element 42 stores the last part of the address, i.e. "/ink-xx". When the print head 26 is mounted in the printer 12, and the ink cartridge 28 is inserted in the print head, the combined contents of the memory elements 40 and 42 can be read by a reading head 44 of the printer which is connected to the Internet client 16. When it is detected with the reading head 44 that a new print head 26 and/or a new ink cartridge 28 has been inserted, the Internet client 16 will automatically call the URI specified on the memory elements and perform a download procedure. When the ink cartridge 28 is replaced by another ink cartridge containing an ink of the type yy, the printing parameters adapted to this type of ink would be downloaded from the sub-page 38 of the web server 10.

Since the printing parameters, for example the voltage levels with which the various nozzles of the print head 26 are to be energised, depend not only on the properties of the print head 26 alone but also on the properties of the ink being used, it will be understood that, when a large number of different inks can be combined with a large number of print heads of different types, the total number of sets of printing parameters may become considerably large, and it would not be practical to store such large amounts of information on the memory elements 40 and 42. The invention therefore has the advantage that the number of different sets of printing parameters that may be offered is practically unlimited and, accordingly, the invention permits to combine the various functional components of the printer more flexibly.

The printer 14 is an example of an ink jet printer in which an ink cartridge or several ink cartridges for different colours are integrated in the print head 46 itself. The printing parameters for the print head 46 are stored on the server page 34 having the sub-address "/print head-II". The page 34 includes sub-pages 48 and 50 which store different sets of printing parameters which are all adapted to print heads 46 of the same type or production series but are optimised for different types of recording paper that may be used in the printer 14. This is because the optimal size of the ink droplets, that is determined by the printing parameters, may be different for different recording media. The type of recording paper loaded into the printer 14 may be input manually on the printer console or through one of the workstations. If the memory 30 of the control unit of the printer 14 is capable of storing only a single set of printing parameters, then the printer must be reconfigured each time the recording paper is changed. If, however, the memory 30 can store several sets of printing parameters, then the configuration procedure will include downloads of several sub-pages 48, 50, and the active set of printing parameters will be selected in the printer 14, dependent on the type of recording paper.

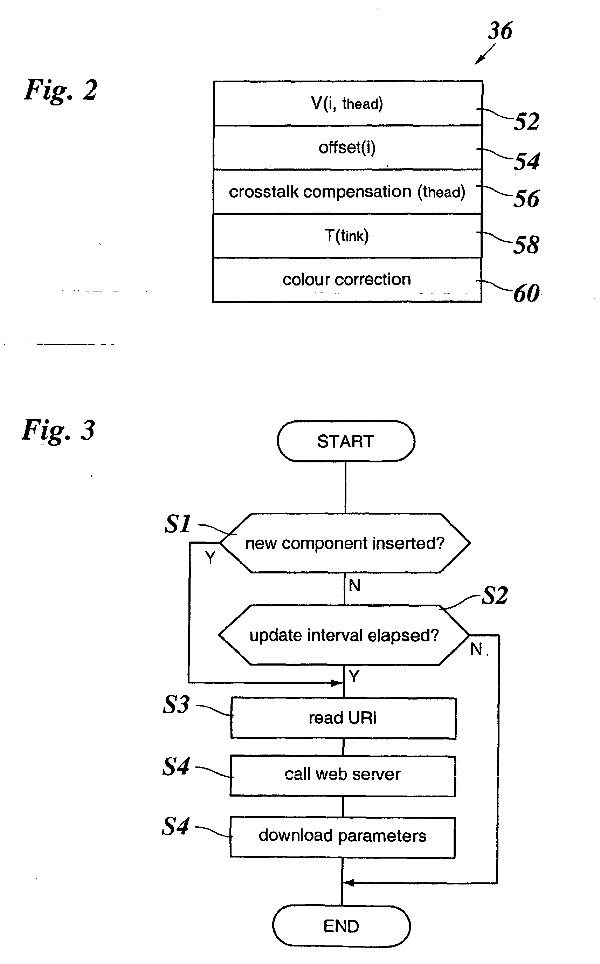

Figure 2 is an example of a possible set of printing parameters for an ink jet print head, e.g., the print head 26 shown in figure 1, which has a plurality of nozzles (indicated by the index i) which may be energised individually. A first group 52 of parameters V(i,thead) specifies, for each nozzle, the voltage with which the nozzle should be energised in order to obtain an ink droplet of optimal size. These parameters are determined experimentally for each production series of print heads and are then stored on a corresponding page on the web server 10. Due to manufacturing tolerances, the optimal voltage values may slightly vary from one production series to the other, even if all print heads belong to the same type. This is why a separate sub-page is provided for each production series, and the address of the pertinent sub-page is stored on the memory elements 40 of all the print heads belonging to this production series.

In addition, since the print heads are subject to ageing, the optimal energising voltages may depend on the accumulated time thead for which the print head has been operating. The invention offers the possibility to make a correction for these ageing effects by re-configuring the printer from time to time. The accumulated operating time thead may be stored in a register in the control unit 18 of the printer and may be transmitted to the web server 10 in the configuration procedure. Then, one server sub-page will contain the correct voltages for operating times thead between, for example, 50 to 100 hours, another one for 100 to 150 hours and so on. As an alternative, the server page may be an active page calculating the correct voltages on the basis of the value thead transmitted through the Internet.

Another group 54 of printing parameters specifies - again for each production series - the amount of positional offset of the individual nozzles in the main scanning direction. These parameters are used in the printer for compensating the offsets by modifying the timings at which the individual nozzles are energised.

Another group 56 of printing parameters relates to the compensation of cross talk among the various channels of an ink jet print head. The program loaded in the control unit 18 of the printer will include a certain routine for cross talk compensation which is dependent on the parameters stored in the group 56. Like the optimal energising voltages, these parameters may also depend on the accumulated operating time of the print head. Instead of changing parameters for a fixed routine for cross talk compensation, it would also be possible in the reconfiguration procedure to replace the cross talk compensation routine as a whole.

Another group 58 of printing parameters specifies the optimal temperature T at which the ink should be kept during operation of the print head. In order to obtain a high image quality, careful control of the temperature is necessary, because the temperature has a great influence on the viscosity of the ink and hence on the process of droplet generation. The optimal temperature of the ink may depend on the age tink of the ink. Even when the type of the ink is not changed, the viscosity of the ink and hence the temperature parameter T may be subject to variations, because the ink is prepared in a batch process, and the physical properties of the ink may vary from batch to batch. All these effects can be taken into account by providing separate sub-pages 36 for each production batch of the ink or (i.e. the address "/ink-xx" would stand for a specific production batch). The temperature parameter T stored on that page will then be determined on the basis of both the original viscosity and the age of the ink. The original viscosity is measured for each batch right after production, and the age of the ink is known from the production date of the batch.

Yet another group 60 of printing parameters relates to colour correction in a multi-colour print head. The routine for colour correction or parameters for these routine will depend on the type of ink which is implicitly specified by the address information in the memory element 42 of the ink cartridge.

Figure 3 is a flow chart of a program for configuring or re-configuring the printer. This program may for example be performed by the control unit 18 of the printer each time the power switch of the printer is turned on. In step S1, the signal provided by the reading head 44 is checked in order to determine whether the contents of the memory elements 40 and 42 have changed. Such a change would indicate that a new component (print head or ink cartridge) has been inserted. If this is not the case, is checked in step S2 whether a certain update interval has elapsed. This update interval is a time interval (e.g. in the order of several months) after which the printer should be reconfigured in view of any possible updates that have been entered into the web server 10 in the meantime. If neither a new component has been inserted nor the update interval has elapsed, the program is abandoned. Otherwise, the URI specified in the memory elements 40 and 42 is read in step S3. Then, in step S4, the Internet client 16 is caused to establish a connection to the pertinent sub-page of the web server 10, and the printing parameters PP stored on that sub-page are downloaded in step S5.

## Claims

1. Method of configuring a printer (12, 14), wherein a set of downloaded printing parameters (PP) is stored in a control unit (18) of the printer, **characterised by** the steps of:
- storing the set of printing parameters (PP), which is adapted to a specific functional component (26, 28, 46) of the printer (12, 14) in a storage device (10) addressable over the Internet at a predetermined URI (universal Resource Identifier),
- when the printer (12, 14) is to be configured, automatically getting access to said URI, and
- downloading the set of printing parameters (PP) directly from the storage device (10) into the control unit (18) of the printer.

2. Method according to claim 1, wherein said specific URI is indicated on the functional component (26, 28, 46) in a machine-readable format so as to be read automatically in the printer.

3. Method according to claim 1 or 2, wherein the printing parameters are individually determined for each production series of the functional components (26, 28, 46) on the basis of measurements performed on samples of the functional components for each production series, and the printing parameters for different production series are stored separately in the storage device (10).

4. Method according to any one of the preceding claims, wherein the printing parameters (PP) comprise data and/or program code for reconfiguring the printer (12, 14) in accordance with the type of recording medium being used.

5. Method according to any one of the preceding claims comprising:
- detecting by the control unit (18) whether a functional component has been interchanged, and if so,
- initiating a download of a new set of printing parameters pertinent to the new functional component.

6. Printer comprising a control unit (18) including a memory (30) in which printing parameters (PP) can be stored, **characterised in that** the control unit (18) includes an Internet client (16) , being capable of, when the printer is to be configured, automatically getting access to an URI, at which the printing parameters (PP) are stored, and being capable of downloading a set of said printing parameters (PP) Into the memory (30), said set being adapted to a specific functional component (26, 28, 46) of the printer.

7. Printer according to claim 6, having at least one interchangeable functional component (26, 28, 46), wherein the control unit (18) is adapted to detect whether a functional component has been interchanged and, if this is the case, to initiate a download of a new set of printing parameters pertinent to the new functional component.

8. Printer according to claim 7, wherein the interchangeable functional component (26, 28, 46) is provided with a memory element (40, 42) storing URI information, and the printer (12, 14) has a reading head (44) for reading said URI information when the functional component is inserted in the printer.

9. Printer according to claim 6, 7 or 8, wherein the internet client (16) is arranged to initiate a download of new printing parameters each time a predetermined time interval has elapsed.

10. Ink cartridge for use as an interchangeable functional component (26) in a printer as claimed in claim 8, **characterised in that** the ink cartridge includes a memory element (42) in which an URI is stored in a machine-readable format.

11. Toner cartridge for use as an interchangeable functional component (28) in a printer as claimed in claim 8, **characterised in that** the toner cartridge includes a memory element (42) in which an URI is stored in a machine-readable format.

## Patentansprüche

1. Verfahren zum Konfigurieren eines Druckers (12, 14), bei dem ein Satz von heruntergeladenen Druckparametern (PP) in einer Steuereinheit (18) des Druckers gespeichert wird, **gekennzeichnet durch** die folgenden Schritte;
- Speichern des Satzes von Druckparametern (PP), der an eine spezifische Funktionskomponente (26, 28, 48) des Druckers (12, 14) angepaßt ist, in einer Speichereinrichtung (10), die über das Internet mit einem vorbestimmten URI (Universal Ressource Identifier) adressierbar ist,
- wenn der Drucker (12, 14) konfiguriert werden soll, automatischer Zugriff auf diesen URI, und
- Herunterladen des Satzes von Druckparametern (PP) direkt von der Speichereinrichtung (10) in die Steuereinheit (18) des Druckers.

2. Verfahren nach Anspruch 1, bei dem die spezifische URI in einem maschinenlesbaren Format auf der Funktionskomponente (26, 28, 46) angegeben ist, so daß sie automatisch in dem Drucker gelesen werden kann.

3. Drucker nach Anspruch 1 oder 2, bei dem die Druckparameter für jede Produktreihe der Funktionskomponenten (26 28, 46) individuell bestimmt sind, auf der Grundlage von Messungen, die an Proben der Funktionskomponenten für jede Produktreihe vorgenommen werden, und die Druckparameter für unterschiedliche Produktionsreihen getrennt in der Speichereinrichtung (10) abgelegt werden.

4. Verfahren nach einem der vorstehenden Ansprüche, bei dem die Druckparameter (PP) Daten und/oder Programmcode zum Rekonfigurieren des Druckers (12, 14) in Übereinstimmung mit dem Typ des verwendeten Aufzeichnungsmediums umfassen.

5. Verfahren nach einem der vorstehenden Ansprüche, mit:
- Detektieren, mit Hilfe der Steuereinheit (18), ob eine Funktionskomponente ausgetauscht worden ist und, wenn ja,
- Initiieren eines Downloads eines neuen Satzes von Druckparametern, der zu der neuen Funktionskomponente gehört.

6. Drucker mit einer Steuereinheit (18), die einen Speicher (30) aufweist, in dem Druckparameter (PP) gespeichert werden können, **dadurch gekennzeichnet, daß** die Steuereinheit (18) einen Internet-Klienten (16) enthält, der in der Lage ist, wenn der Drucker konfiguriert werden soll, automatisch auf einen URI zuzugreifen, unter welchem die Druckparameter (PP) gespeichert sind, und in der Lage ist, einen Satz von Druckparametern (PP) in den Speicher (30) herunterzuladen, wobei dieser Satz an eine spezifische Funktionskomponente (26, 28, 46) des Druckers angepaßt ist.

7. Drucker nach Anspruch 6, mit wenigstens einer austauschbaren Funktionskomponente (26, 28, 46), bei dem die Steuereinheit (18) dazu eingerichtet ist, zu detektieren, ob eine Funktionskomponente ausgetauscht worden ist, und, wenn dies der Fall ist, einen Download eines neuen Satzes von Druckparametern zu initiieren, der zu der neuen Funktionskomponente gehört.

8. Drucker nach Anspruch 7, bei dem die austauschbare Funktionskomponente (26, 28, 46) ein Speicherelement (40, 42) aufweist, in dem URI-Information gespeichert ist, und der Drucker (12, 14) einen Lesekopf (44) aufweist, zum Lesen dieser URI-Information, wenn die Funktionskomponente in den Drucker eingesetzt wird.

9. Drucker nach Anspruch 6, 7 oder 8, bei dem der Internet-Klient (16) dazu ausgebildet ist, einen Download von neuen Druckparametern jedes Mal dann zu initiieren, wenn eine vorbestimmte Zeitspanne abgelaufen ist.

10. Tintenpatrone zum Gebrauch als austauschbare Funktionskomponente (28) in einem Drucker nach Anspruch 8, **dadurch gekennzeichnet, daß** die Tintenpatrone ein Speicherelement (42) aufweist, in dem ein URI in einem maschinenlesbaren Format gespeichert ist.

11. Tonerpatrone zum Gebrauch als austauschbare Funktionskomponente (28) in einem Drucker nach Anspruch 8, **dadurch gekennzeichnet, daß** die Tonerpatrone ein Speicherelement (42) aufweist, in dem ein URI in einem maschinenlesbaren Format gespeichert ist.

## Revendications

1. Procédé de configuration d'une imprimante (12, 14), dans laquelle un jeu de paramètres d'impression téléchargés (PP) est stocké dans une unité de commande (18) de l'imprimante, le procédé étant **caractérisé par** les étapes suivantes :
- stocker le jeu de paramètres d'impression (PP), conçu pour un composant fonctionnel spécifique (26, 28, 46) de l'imprimante (12, 14) dans une unité de stockage (10) adressable sur Internet à un URI (identificateur de ressource universel),
- lorsque l'imprimante (12, 14) doit être configurée, pouvoir accéder automatiquement audit URI, et
- télécharger le jeu des paramètres d'impression (PP) directement à partir de l'unité de stockage (10) dans l'unité de commande (18) de l'imprimante.

2. Procédé selon la revendication 1, dans lequel ledit URI spécifique est indiqué sur le composant fonctionnel (26, 28, 46) dans un format exploitable par une machine, de manière à être lu automatiquement dans l'imprimante.

3. Procédé selon la revendication 1 ou 2, dans lequel les paramètres d'impression sont déterminés individuellement pour chaque série produite de composants fonctionnels (26, 28, 46) d'après les mesures réalisées sur des échantillons des composants fonctionnels de chaque série produite, et dans lequel les paramètres d'impression des différentes séries produites sont stockés séparément dans l'unité de stockage (10).

4. Procédé selon l'une quelconque des revendications précédentes, dans lequel les paramètres d'impression (PP) comprennent des données et/ou un code de programme permettant de reconfigurer l'imprimante (12, 14) selon le type de support d'enregistrement utilisé.

5. Procédé selon l'une quelconque des revendications précédentes consistant à :
- détecter au moyen de l'unité de commande (18) si un composant fonctionnel a été interchangé ou non, et dans l'affirmative,
- initier le téléchargement d'un nouveau jeu de paramètres d'impression adéquat pour le nouveau composant fonctionnel.

6. Imprimante comprenant une unité de commande (18) contenant une mémoire (30), dans laquelle les paramètres d'impression (PP) peuvent être stockés, **caractérisé en ce que** l'unité de commande (18) contient un client internet (16), capable, lorsque l'imprimante doit être configurée, d'accéder automatiquement à un URI, sur lequel les paramètres d'impression (PP) sont stockés, et capable de télécharger un jeu desdits paramètres d'impression (PP) dans la mémoire (30), ledit jeu étant conçu pour un composant fonctionnel spécifique (26, 28, 46) de l'imprimante.

7. Imprimante selon la revendication 6 ayant au moins un composant fonctionnel interchangeable (26, 28, 46), dans laquelle l'unité de commande (18) est conçue pour détecter si un composant fonctionnel a été ou non interchangé, et si c'est le cas, pour initier le téléchargement d'un nouveau jeu de paramètres d'impression adéquat pour le nouveau composant fonctionnel.

8. Imprimante selon la revendication 7, dans laquelle le composant fonctionnel interchangeable (26, 28, 46) est constitué d'un élément de mémoire (40, 42) stockant l'information URI et l'imprimante (12, 14) a une tête de lecture (44) permettant de lire ladite information URI lorsque le composant fonctionnel est inséré dans l'imprimante.

9. Imprimante selon les revendications 6, 7 ou 8, dans laquelle le client Internet (16) est configuré pour initier le téléchargement de nouveaux paramètres d'impression chaque fois qu'un intervalle de temps prédéterminé s'est écoulé.

10. Cartouche d'encre à utiliser comme composant fonctionnel interchangeable (28) dans une imprimante telle que revendiquée dans la revendication 8, **caractérisée en ce que** la cartouche d'encre contient un élément de mémoire (42), dans lequel un URI est stocké dans un format exploitable par une machine.

11. Cartouche de toner à utiliser comme composant fonctionnel interchangeable (28) dans une imprimante telle que revendiquée dans la revendication 8, **caractérisée en ce que** la cartouche de toner contient un élément de mémoire (42), dans lequel un URI est stocké dans un format exploitable par une machine.
